# EUROPEAN PATENT SPECIFICATION

(11) **EP 4 256 676 B1**
(45) Date of publication and mention of the grant of the patent: **08.07.2026**
(21) Application number: 20821153.2
(22) Date of filing: 04.12.2020
(51) Int. Cl.: H02K 1/14, H02K 15/022, H02K 29/03

(54) **CLAW-POLE STATOR FOR AN ELECTRIC MOTOR**
KLAUENPOLSTATOR FÜR EINEN ELEKTROMOTOR
STATOR COMPRENANT DES POLES EN FORME DE GRIFFE POUR UN MOTEUR ELECTRIC

(43) Date of publication of application: 11.10.2023
(73) Proprietor: Pierburg Pump Technology GmbH, 41460 Neuss (DE)
(72) Inventor: WERNER, Kornelius, 41460 Neuss (DE); PORZ, Gerald, 41460 Neuss (DE)
(74) Representative: Eisenführ Speiser
(86) International application number: PCT/EP2020/084767
(87) International publication number: WO 2022/117217

(56) References cited:
- DE-A1- 1 788 017
- JP-B2- 6 686 310
- US-A1- 2007 286 753
- US-B1- 6 864 612

## Description

The invention is directed to a claw-pole stator for an electric motor, in particular to a claw-pole stator made of a single metal sheet and being applicated, for example, in a single-phase electric pump motor. US 6,864,612 B1 discloses a claw-pole stator made of two separated pieces with claw poles defining several pole fingers.

Typically, a claw-pole stator is made of two separate circular and identical pole bodies. Each pole body comprises a radial ring section and several claw-type protrusions, defining the claw-poles, which are arranged equidistantly over the circumference of the pole body. Each claw-pole comprises a radial section, which is substantially rectangular or cake slice-shaped with a flat-topped tip. The radial section is connected to the ring section and extends either outwards or inwards. The claw-pole further comprises an axial section, which is connected to the radial section and can be provided with different shapes, for example, with a tapering triangular shape.

The distance between the claw-poles of a pole body is slightly larger than the circumferential width of one claw-pole, so that a castellated structure with interspaces between two adjacent claw-poles is defined. For assembling, the two separate pole bodies are arranged axially opposite to each other, wherein one of the pole bodies is offset by one claw-pole width, so that the claw-poles of one pole body are positioned in the interspaces of the other pole body. The pole bodies are magnetically connected by a separate yoke-type back-iron ring, which is arranged at the open edge of the ring section. Thereby, the back-iron ring and the pole bodies define a ring channel, which is provided with a ring-shaped coil. The coil wire is circumferentially wound within the ring channel, so that the claw-pole stator is single-phased. The coil excites the separate pole bodies, so that one pole body and thereby the claw-poles of this pole body are magnetised with a North polarisation and the other pole body with a South polarisation. This results in an alternating magnetic polarisation of the adjacent claw-poles of the assembled claw-pole stator.

Examples of such claw-pole stators are disclosed in EP 0 043068 A1 and in DE 10 2008 054 037 A1. Both documents disclose a claw-pole stator being made of a metal sheet, wherein a circular or star-shaped blank is punched and is deep-drawn to form the axial section of the claw-poles. EP 0 043 068 A1 shows the claw-poles being oriented inwards, so that the punching of the circular blank limits the axial length of the claw-pole stator.

Both embodiments disclose a multi-piece claw-pole stator, which requires an additional assembly step for positioning and connecting the single stator components.

For reducing the production costs of the stator body, DE 1 788 017 A1 discloses a one-piece stator body, which is made of a single metal sheet and which comprises an integrally back-iron ring and alternately opposite oriented claw-poles. The stator body is made by bending a linear metal strip with alternately transversally oriented pole strips, which extend alternately in opposite transversal direction. The metal strip is bent into a polygonal ring-shaped stator and the opposite pole strips are bent inversely to the same side of the metal strip, so that the stator is provided with oppositely oriented claw-poles defining a polygonal ring opening at the centre of the stator.

The polygonal ring opening is not ideal for the efficiency of the electric motor. The single claw-poles are tangentially oriented to the rotor of the electric motor, so that the air gap between the rotor and the poles is not constant. For example, if a circular rotor rotates with in a hexagonal ring opening, the distance between the rotor and the poles is larger at the corners of the hexagon, then at the centre of the hexagon side. As a result, the magnetic field, which is driving the rotor, is inhomogeneous and reduces the efficiency and the torque of the electric motor.

It is an object of the invention to provide a cost-efficient claw-pole stator with improved features over the prior art.

This object is achieved by a claw-pole stator according to the invention with the features of claim 1.

A claw-pole stator for an electric motor according to the invention comprises a ring-shaped back-iron yoke and several L-shaped claw-poles with alternating orientation. For example, every second claw-pole extends from the opposite axial end of the back-iron yoke than the other claw-poles, so that the claw poles are arranged alternately opposite. Each of the L-shaped claw-poles comprises a substantially radially extending section, which is at its one radial end connected to the back-iron yoke. This radial section extends in a transversal stator plane to the inside or outside. Preferably, originating from the exterior back-iron yoke, the radial section extends radially inwards.

Each claw-pole further comprises an axially extending section, which is connected to the radial section of the claw-pole at the other radial end of the radial section. This axial section of the claw-pole is defined by at least two equidirectional pole-fingers. The axial section is, as a result, segmented according to the number of pole-fingers. The pole-fingers are adjacent to each other and define a sidewall of a polygonal rotor ring opening. The pole-fingers are substantially parallel to each other and extend substantially parallel to a stator centreline. The pole-fingers of the claw-pole axial section extend in the same axial direction as the back-iron yoke, seen from the connection with the radial section of the claw-pole, so that the ring-shaped back-iron yoke, the axial section and the radial section of the claw-pole define a U-shaped body referring to a radial cross-section.

Due to the alternately opposite arrangement of the claw-poles, the axial sections of two adjacent claw-poles are antiparallel. The ring-shaped back-iron yoke and the alternately opposite oriented claw-poles thereby define a ring channel at the inner radial side of the back-iron yoke.

As the rotor ring opening is defined by the circumferentially arranged plane pole-finger sidewalls, the rotor ring opening is polygonal and the number of polygon sides is the double of the number of claw-poles, assuming a claw-pole axial section being defined by exactly two pole-fingers. For example, a stator with six claw-poles and twelve pole-fingers is provided with a dodecagonal rotor ring opening. The axial section of every claw-pole can alternatively be provided with, for example, three pole-fingers or even more, so that the number of polygon sides is not limited to the double of the number of claw-poles.

In an electric motor with the claw-pole stator, a cylindrical motor rotor rotates within the central polygonal rotor opening defined by the claw-pole stator. The width of the defined circumferential air gap between the cylindrical rotor and the polygonal rotor opening is not constant over the circumference. As the geometric ratio between the circumradius and the apothem of the polygon is in particular significant in "low-gon" polygons with a small number of sides, electric motors with, for example, a hexagonal rotor opening are provided with an extreme non-constant air gap causing a low efficiency of the electric motor. With an increasing number of polygon sides, the geometric ratio becomes smaller until the polygon approximates to a circular shape. For that reason, a doubled number of polygon sides, for example, twelve polygon sides in place of six polygon sides results in a much more constant air gap and thereby in a significant increase of the electric efficiency of the electric motor.

In a preferred embodiment of the invention, the pole-fingers extend into the radially extending section of the claw-poles. Thereby, the pole-fingers define both the axial section and the radial section of all claw-poles. The radial section of the claw-poles is also segmented according to the number of pole-fingers at each claw-pole. The number of segments of both the axial section and the radial section are equal. Accordingly, each claw-pole is completely defined by the pole-fingers. The segmentation of the claw-poles allows a more precise orientation of the claw-poles with a relatively low deforming stress within the crystalline grid structure of the stator material resulting in a high magnetic permeability of the stator.

Preferably, the claw-pole stator according to the invention is provided with a polygonal ring-shaped back-iron yoke. The number of sides of the polygon is thereby equal to the number of polygon sides of the rotor opening. A claw-pole stator with, for example, six claw-poles thereby is provided with a dodecagonal stator back-iron yoke and is, for example, provided with twelve pole-fingers, so that the ring opening also defines a dodecagon.

The polygonal ring opening preferably defines a regular polygon. Thus, the polygon is equiangular with an equal angular difference between the base planes of each side wall of the polygonal rotor opening. Additionally, the polygon is equilateral with the side walls of the polygonal rotor opening being all of the same circumferential length. As a result, all pole-fingers defining the side walls of the rotor opening are identically formed and equidistantly arranged over the circumference of the stator. The resulting relatively homogeneous magnetic field within the stator results in a relatively high efficiency of the electric motor. Additionally, the manufacturing process of the claw-pole stator is relatively simple and, as a result, is cost-efficient.

In a preferred embodiment of the invention, the claw-pole stator according to the invention is manufactured of a single plane and contoured stator metal sheet, which is formed to the claw-pole stator, for example by bending or folding. The term "plane metal sheet" also includes a slightly curved metal sheet, for example taken from a sheet metal coil. The contoured stator metal sheet comprises an elongated plane back-iron yoke metal strip and several substantially transversally oriented claw-pole strip arrangements. The plane back-iron yoke metal strip is substantially linear and is provided with a substantially rectangular shape. The claw-pole strip arrangements are connected to the plane back-iron yoke metal strip at the longitudinal side of the back-iron yoke metal strip and are oriented substantially perpendicularly to the back-iron yoke metal strip's longitudinal axis.

Each claw-pole strip arrangement is at least partially defined by at least two substantially parallel and equidirectional pole-finger strips. Depending on the embodiment of the claw-pole stator either with pole-fingers only in the axial section or with pole-fingers in the axial section and the radial section, the claw-pole strips are either partially or completely defined by the pole-finger strips. For forming the claw-pole stator, initially, the claw-pole strips or rather the pole-finger strips are folded substantially about 90° referring to the stator metal sheet plane, so that the radial section and the axial section define an L-shaped claw-pole. After folding the claw-poles, the back-iron yoke metal strip is bent to a ring-shaped back-iron yoke. Each L-shaped claw-pole and a corresponding inner section of the back-iron yoke define a groove segment with a U-shaped radial cross-section, so that all claw-poles and the back-iron yoke define a ring channel, which can be provided with a ring-shaped single-phase electric stator coil for driving the electric motor.

The shape of the claw-pole strips as well as the shape of the pole-finger strips is preferably trapezoid. The section of the claw-pole strip, which defines the radial section, after the plane stator metal sheet has been bent into the finalized claw-pole stator shape, is defined by at least one symmetrical trapezium. In case of a claw-pole stator with a completely segmented claw-pole, this section is segmented into at least two radial section strips, each defining in turn a symmetrical trapezium. The trapezoid radial section strips are shaped such that in the finalized claw-pole stator the radial section strips define a uniform claw-pole radial section with no or a relatively small interspace gap between these two adjacent sections for not relevantly affecting the magnetic field within the claw-pole during the operation of the electric motor.

The pole-finger strips defining the axial section of the finalized claw-pole stator are also trapezoid, but are preferably defined by a right-angled and non-symmetrical trapezium. One longitudinal edge of the pole-finger strip, namely the edge being adjacent to another pole-finger strip of the same claw-pole strip arrangement is oriented substantially perpendicular to the back-iron yoke metal strip longitudinal axis and thereby perpendicular to the bending line of the pole-finger, which defines the bending edge of the pole-finger axial section in the finalized stator. Accordingly, the two adjacent longitudinal edges of two adjacent pole-finger strips of the same claw-pole strip arrangement are parallel, so that no or a relatively small air gap is provided between the adjacent pole-fingers, after the stator metal sheet has been bent.

In contrast, the free longitudinal edge of each pole strip opposite to the adjacent pole-finger strip is slanted. Both adjacent pole-finger strips thereby taper towards their axial free ends.

In case of a claw-pole with more than two pole-fingers, every claw-pole is provided with two outer pole-finger strips and one or more intermediate pole-finger strips between the outer pole-finger strips. In this embodiment the outer pole-finger strips are tapering being provided with one slanted longitudinal edge, namely the outer edge opposite to the intermediate pole-finger strips. The intermediate pole-finger strips are not tapering and are provided with two substantially parallel longitudinal edges defining a pole-finger strip with a substantially rectangular shape.

The one-sided tapering of the outer pole-finger strips provides a both-sided tapering claw-pole axial section of the finalized claw-pole stator, which provides a sufficient air gap between the adjacent claw-poles of different magnetic polarisations.

In a preferred embodiment of the invention, the single plane stator metal sheet is provided with a fastening means at both longitudinal free ends of the back-iron yoke metal strip. The fastening means at both longitudinal free ends correspond to each other and define a fastening mechanism, for example, according to the tongue-groove principle. After the stator has been bent, the corresponding fastening means are connected and thereby interlock the ring-shaped back-iron yoke, after the back-iron yoke metal strip has been bent. This fastening mechanism thereby secures the back-iron yoke in its ring shape and also aligns the free ends of the back-iron yoke.

An embodiment of the invention is described with reference to the enclosed drawings, wherein
figure 1 shows an embodiment of the finalized claw-pole stator according to the invention in a perspective view,
figure 2 shows a top view of an embodiment of the stator metal sheet, of which the claw-pole stator is manufactured, respectively the unbent claw-pole stator of figure 1, and
figure 3 shows a top view of the claw-pole stator of figure 1 with an electric coil.

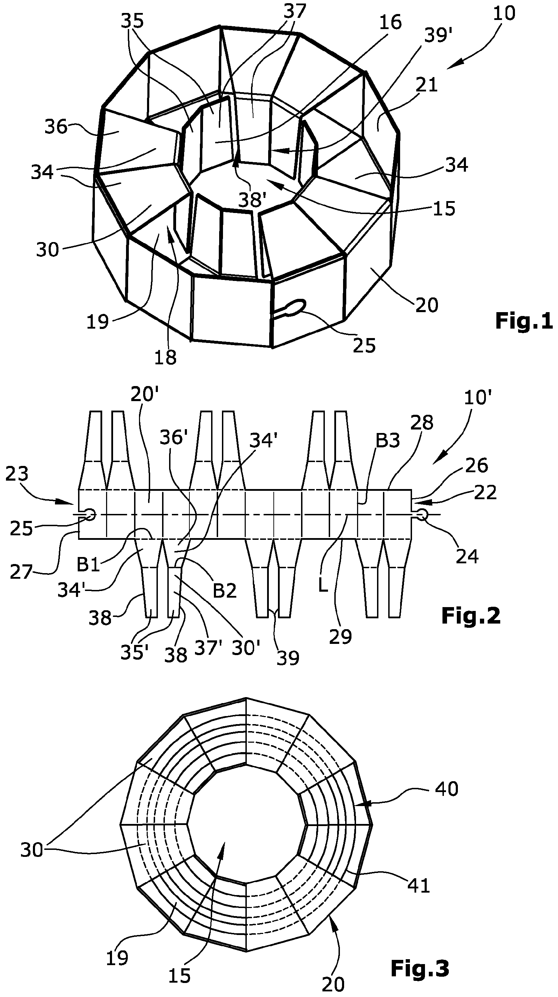

Figure 1 shows a claw-pole stator 10 of a single-phased electric motor being applicated in automotive auxiliary unit components, for example, in a water circulation pump. The claw-pole stator 10 comprises a polygonal ring-shaped back-iron yoke 20 and six claw-poles 30. The back-iron yoke 20 is made of a plane rectangular back-iron yoke metal strip 20', which is part of a plane stator metal sheet 10', shown in figure 2. The plane back-iron yoke metal strip 20' is provided with an elongated linear shape defining a metal sheet plane. The back-iron yoke metal strip 20' is bent sectionwise out of the metal sheet plane into a dodecagonal back-iron yoke 20, so that, after the stator metal sheet 10' has been bent, the longitudinal ends of the elongated metal strip 20' extend in axial direction of the finalized claw-pole stator 10. The edges 26,27 of the free longitudinal ends 22,23 of the back-iron yoke metal strip 20' are thereby parallel oriented and adjacent to each other defining one corner of the dodecagon. The dodecagon is regular, i.e. it is equiangular and equilateral. Thereby all claw-poles 30 are equiangularly arranged and identically-shaped.

One of the free ends 22,23 is provided with a mushroom-shaped opening 25 being oriented in longitudinal direction of the back-iron yoke metal strip 20' and defining one part of a groove-tongue fastening mechanism. The mushroom-shaped opening 25 comprises a circular section and a rectangular section, wherein the width of the rectangular section is smaller than the diameter of the circular section. Referring to the edge 27 of the free end 23, the circular section is arranged behind the rectangular section, so that a complementary mushroom-shaped tongue 24, which is arranged at the other free end 22 of the back-iron yoke metal strip 20' is locked within the mushroom-shaped opening 25 after the back-iron yoke metal strip 20' is bent into the dodecagonal back-iron yoke 20.

The six L-shaped claw-poles 30, shown in figure 1, are alternately oppositely oriented with an equal distance over the circumference of the dodecagonal back-iron yoke 20. Every claw-pole 30 is defined by two pole-fingers 34, wherein each pole-finger 34,35 defines both one segment of a radial section 36 of the claw-pole 30 and one segment of an axial section 37 of the claw-pole 30. Every pole-finger 34 defining one of two segments of each claw-pole radial section 36 is connected to the back-iron yoke 20 at one of its axial ends. Six of the twelve pole-fingers 34 defining three equioriented claw-poles 30, namely every second claw-pole 30, are connected to the back-iron yoke 20 at a first axial end of the back-iron yoke 20. The other six pole-fingers 34 defining the three opposite claw-poles 30 are connected to the back-iron yoke 20 at a second axial end of the back-iron yoke 20. The pole-fingers 34 defining the radial section 36 of the claw-poles 30 are bent radially inwards referring to the back-iron yoke 20 spanning an angle of 90° between one polygon side 21 of the back-iron yoke 20 and the radial section 36.

The pole-fingers 34 defining the radial section 36 are folded of pole-finger strips 34', which are part of the stator metal sheet 10', shown in figure 2. The pole-finger strips 34' extent from the longitudinal edges of the back-iron yoke metal strip 20' and are oriented in a transversal back-iron yoke metal strip plane. The pole-finger strips 34' are thereby oriented perpendicularly to a back-iron yoke metal strip longitudinal axis L. The pole-finger strips 34' are arranged alternately at one of the two longitudinal edges 28,29 of the back-iron yoke metal strip 20'. Thereby two pole-finger strips 34' defining the radial section 36 of one claw-pole 30 are arranged pairwise with an equidirectional orientation and extend between a first bending line B1 and a second bending line B2, wherein the bending lines B1,B2 define the radial section 36' in the non-bent pole-finger strip 34' corresponding to the radial section 36 of the claw-poles 30 in the finalized claw-pole stator 10 of figure 1. The pole-finger strip radial section 36' is trapezoid and tapers originating from the back-iron yoke metal strip 20'. The two trapezoid pole-finger strips 34' of the radial section 36' are isosceles and mirror-symmetrical and are connected to each other at one corner of the ground side of the trapezium lying on the bending line B1. The pole-finger strips 34' are bent at the bending line B1 out of the metal sheet plane by 90°. All pole-finger strips 34' are bent equidirectional to the same side of the metal sheet plane. After folding the pole-finger strips 34' and after bending the back-iron yoke metal strip 20' to the dodecagon, the slanted edges of the trapezoid radial section 36' of the adjacent pole-finger strips 35' are parallel and in contact to each other, so that the two segments define a uniform radial section 36 of the claw-pole 30.

The axial section 37 of each claw-pole 30, shown in figure 1, is defined by two pole-fingers 35 extending in axial direction of the stator 10. The two pole-fingers are connected to the pole-fingers 34 of the radial section 36 and extend from a transversal stator plane in the same axial direction as the dodecagonal back-iron yoke 20. Thereby the pole-fingers 35 are parallel to the corresponding inner sidewall of the polygon side 21 of the back-iron yoke 20, from which the radial section 36 of the pole-finger 34 extends radially inwards, so that the inner side wall of the polygon side 21 of the back-iron yoke 20, the radial section 36 and the axial section 37 define a U-shaped body, referring to a radial cross-section.

The pole-fingers 35 are folded from corresponding pole-finger strips 35' at the stator metal sheet 10', shown in figure 2. The pole-finger strips 35' are connected to the pole-finger strips 34' defining the radial section 36 of the claw-poles 30 in the folded stator 10 and extend parallel and co-planar to the pole-finger strips 34' outwards referring to the bending line B2. The pole-finger strips 35' are trapezoid and define a right-angled trapezium being defined by having two angles of 90°, so that the trapezium has only one slanted edge 38.

The two adjacent trapezoid pole-finger strips 35' of one claw-pole strip 30' are arranged mirror-inverted. The slanted edges 38 of the trapezoid pole-finger strips 35' define the longitudinal outer edge of the claw-pole strip 30'. In contrast, the inner adjacent edges 39 of the trapezoid pole-finger strips 35' are parallel. The pole-finger strips 35' are folded by 90° at the bending line B2. All pole-finger strips 35' are bent equidirectional out of the metal sheet plane to define the two adjacent axial pole-fingers 35 of one claw-pole 30 in the finalized stator 10. The two adjacent pole-fingers 35 defining the axial section 37 are thereby oriented parallel and equidirectional, so that the inner adjacent edges 39 of the former pole-finger strips 35' are parallel and in contact to each other, shown in figure 1.

As a result, each segment of the pole-fingers 35 defines a plane sidewall 16 of the polygonal ring opening 15 at the centre of the stator 10. The axial sections 37 of the equally oriented claw-poles 30 extending from the first axial end of the back-iron yoke 20 are all equidirectional, whereas the axial sections 37 of the oppositely oriented claw-poles 30 on the other second axial end of the back-iron yoke 20 are oriented antiparallel to the axial sections 37 at the first axial end of the back yoke 20. Due to the slanted edge 38 of the adjacent pole-fingers 35, the claw-pole 30 tapers in free end direction and thereby the air gap 38' between the adjacent antiparallel axial sections 37 of the adjacent alternately oriented claw-poles 30 is larger than the air gap 39' between two pole-fingers 35 defining the axial section 37 of the same claw-pole 30.

The back-iron yoke 20 and each L-shaped claw-pole 30 define a U-shaped groove 18. This U-shaped groove 18 is part of a ring channel 19, which is defined by the back-iron yoke 20 and all circumferentially arranged and alternately oriented L-shaped claw-poles 30, shown in figure 1 and figure 3.

Figure 3 shows the claw-pole stator 10 with an electromagnetic coil 40. The coil wire 41 of the electromagnetic coil 40 is wound concentrically to the back-iron yoke 20 and concentrically to the rotor ring opening 15, so that the electric motor with a stator 10, according to the invention, is single-phased. The coil 40 is arranged within the ring channel 19 and is completely enclosed by the back-iron yoke 20 and the alternately oriented claw-poles 30. Accordingly, a pre-wound coil 40 is assembled before bending the stator metal sheet 10' into the claw-pole stator 10, so that the stator metal sheet 10' is bent around the pre-wound coil 40.

## Claims

1. A claw-pole stator (10) being made of a single stator metal sheet (10') with
a ring-shaped back-iron yoke (20), and
several L-shaped claw-poles (30) with alternating orientation,
each claw-pole (30) comprising a substantially radially extending section (36) being connected to the back-iron yoke (20) and a substantially axially extending section (37) being connected to the radial section (36), **characterized in that**
the axially extending section (37) is defined by at least two equidirectional pole-fingers (35) being adjacent to each other, each pole-finger (35) defining a side wall (16) of a polygonal rotor ring opening (15), and
the number of polygon sides is the double of the number of claw-poles (30).

2. The claw-pole stator (10) according to claim 1, wherein the pole-fingers (35) extend into the radially extending section (36) of the claw-poles (30), so that the pole-fingers (35) define both the axial section (37) and the radial section (36) of all claw-poles (30).

3. The claw-pole stator (10) according to one of the preceding claims, wherein the ring-shaped back-iron yoke (20) is polygonal.

4. The claw-pole stator (10) according to claim 3, wherein the number of sides of the polygonal back-iron yoke (20) is equal to the number of pole-fingers (35).

5. The claw-pole stator (10) according to one of the preceding claims, wherein the polygonal ring opening (15) defines a regular polygon.

6. The single stator metal sheet (10') for manufacturing the claw-pole stator (10) according to one of the preceding claims comprises a longitudinal back-iron yoke metal strip (20') and several substantially transversally oriented claw-pole strips (30'), the claw-pole strips (30') extending alternately in opposite directions being substantially perpendicular to a back-iron yoke metal strip longitudinal axis (L), each claw-pole strip (30') being defined at least partially by at least two substantially parallel and equidirectional pole-finger strips (35'), wherein each pole finger strip (35') is configured to define by bending one of the at least two adjacent axial pole-fingers (35) of one claw-pole (30) in the finalized claw-pole stator (10).

7. The single metal sheet (10') according to claim 6, wherein the claw-pole strips (30') are trapezoid.

8. The single metal sheet (10') according to claim 6 or 7, wherein the pole-finger strips (35') are trapezoid.

9. The single metal sheet (10') according to one of the claims 6-8, wherein each of both longitudinal free ends (22,23) of the back-iron yoke metal strip (20') comprise fastening means (24,25) being complementary to each other to interlock the back-iron yoke metal strip (20') after deforming it into the ring-shaped back-iron yoke (20).

## Patentansprüche

1. Klauenpol-Stator (10), der aus einem einzigen Statorblech (10') hergestellt ist mit einem ringförmigen Eisenrückschluss (20), und
mehreren L-förmigen Klauenpolen (30) mit abwechselnder Ausrichtung,
wobei jeder Klauenpol (30) einen sich im Wesentlichen radial erstreckenden Abschnitt (36), der mit dem Eisenrückschluss (20) verbunden ist, und einen sich im Wesentlichen axial erstreckenden Abschnitt (37) umfasst, der mit dem radialen Abschnitt (36) verbunden ist, **dadurch gekennzeichnet, dass**
der sich axial erstreckende Abschnitt (37) durch mindestens zwei gleichgerichtete, zueinander benachbarte Polfinger (35) gebildet wird, wobei jeder Polfinger (35) eine Seitenwand (16) einer polygonalen Rotorringöffnung (15) bildet, und
die Anzahl der Polygonseiten das Doppelte der Anzahl der Klauenpole (30) beträgt.

2. Klauenpol-Stator (10) nach Anspruch 1, wobei sich die Polfinger (35) in den radial verlaufenden Abschnitt (36) der Klauenpole (30) erstrecken, so dass die Polfinger (35) sowohl den axialen Abschnitt (37) als auch den radialen Abschnitt (36) aller Klauenpole (30) bilden.

3. Klauenpol-Stator (10) nach einem der vorstehenden Ansprüche, wobei der ringförmige Eisenrückschluss (20) polygonal ist.

4. Klauenpol-Stator (10) nach Anspruch 3, wobei die Anzahl der Seiten des polygonalen Eisenrückschlusses (20) der Anzahl der Polfinger (35) entspricht.

5. Klauenpol-Stator (10) nach einem der vorstehenden Ansprüche, wobei die polygonale Ringöffnung (15) ein regelmäßiges Polygon bildet.

6. Einzelnes Statorblech (10') zum Herstellen des Klauenpol-Stators (10) nach einem der vorstehenden Ansprüche umfassend einen längs gerichteten Eisenrückschluss-Metallstreifen (20') und mehrere im Wesentlichen quer ausgerichtete Klauenpol-Streifen (30'), wobei sich die Klauenpol-Streifen (30') abwechselnd in entgegengesetzte Richtungen erstrecken und im Wesentlichen senkrecht zu einer Längsachse (L) des Eisenrückschluss-Metallstreifens angeordnet sind, wobei jeder Klauenpol-Streifen (30') zumindest teilweise durch mindestens zwei im Wesentlichen parallele und gleichgerichtete Polfingerstreifen (35') definiert ist, wobei jeder Polfingerstreifen (35') so ausgebildet ist, dass er durch Biegen einen der mindestens zwei benachbarten axialen Polfinger (35) eines Klauenpols (30) im fertigen Klauenpol-Stator (10) definiert.

7. Einzelnes Metallblech (10') nach Anspruch 6, wobei die Klauenpol-Streifen (30') trapezförmig sind.

8. Einzelnes Metallblech (10') nach Anspruch 6 oder 7, wobei die Polfingerstreifen (35') trapezförmig sind.

9. Einzelnes Metallblech (10') nach einem der Ansprüche 6-8, wobei jedes der beiden freien Längsenden (22, 23) des Eisenrückschluss-Metallstreifens (20') Befestigungsmittel (24, 25) umfasst, die zueinander komplementär sind, um den Eisenrückschluss-Metallstreifen (20') nach dessen Verformung zu dem ringförmigen Eisenrückschluss (20) zu verriegeln.

## Revendications

1. Stator à pôles à griffes (10) constitué d'une feuille métallique unique (10') de stator avec une culasse à contre-fer (20) en forme d'anneau, et
plusieurs pôles à griffes (30) en forme de L à orientation alternée,
chaque pôle à griffes (30) comprenant une section s'étendant sensiblement radialement (36) qui est reliée à la culasse à contre-fer (20) et une section s'étendant sensiblement axialement (37) qui est reliée à la section radiale (36), **caractérisé en ce que** la section s'étendant axialement (37) est définie par au moins deux doigts de pôle (35) équidirectionnels adjacents l'un à l'autre, chaque doigt de pôle (35) définissant une paroi latérale (16) d'une ouverture annulaire polygonale (15) de rotor, et
le nombre de côtés de polygone est le double du nombre de pôles à griffes (30).

2. Stator à pôles à griffes (10) selon la revendication 1, dans lequel les doigts de pôle (35) s'étendent dans la section s'étendant radialement (36) des pôles à griffes (30), de sorte que les doigts de pôle (35) définissent à la fois la section axiale (37) et la section radiale (36) de tous les pôles à griffes (30).

3. Stator à pôles à griffes (10) selon l'une des revendications précédentes, dans lequel la culasse à contre-fer (20) en forme d'anneau est polygonale.

4. Stator à pôles à griffes (10) selon la revendication 3, dans lequel le nombre de côtés de la culasse à contre-fer (20) polygonale est égal au nombre de doigts de pôle (35).

5. Stator à pôles à griffes (10) selon l'une des revendications précédentes, dans lequel l'ouverture annulaire polygonale (15) définit un polygone régulier.

6. Feuille métallique unique (10') de stator pour la fabrication du stator à pôles à griffes (10) selon l'une des revendications précédentes comprenant une bande métallique de culasse à contre-fer longitudinale (20') et plusieurs bandes de pôles à griffes (30') orientées sensiblement transversalement, les bandes de pôles à griffes (30') s'étendant alternativement dans des directions opposées sensiblement perpendiculaires à un axe longitudinal (L) de bande métallique de culasse à contre-fer, chaque bande de pôles à griffes (30') étant définie au moins partiellement par au moins deux bandes de doigts de pôle (35') sensiblement parallèles et équidirectionnelles, dans laquelle chaque bande de doigts de pôle (35') est configurée pour définir par flexion l'un des au moins deux doigts de pôle (35) axiaux adjacents d'un pôle à griffes (30) dans le stator à pôles à griffes (10) finalisé.

7. Feuille métallique unique (10') selon la revendication 6, dans laquelle les bandes de pôles à griffes (30') sont trapézoïdales.

8. Feuille métallique unique (10') selon la revendication 6 ou 7, dans laquelle les bandes de doigt de pôle (35') sont trapézoïdales.

9. Feuille métallique unique (10') selon l'une des revendications 6 à 8, dans laquelle chacune des deux extrémités libres longitudinales (22, 23) de la bande métallique de culasse à contre-fer (20') comprend des moyens de fixation (24, 25) complémentaires l'un à l'autre pour emboîter la bande métallique de culasse à contre-fer (20') après l'avoir déformée dans la culasse à contre-fer (20) en forme d'anneau.
